# EUROPEAN PATENT APPLICATION

(11) **EP 4 530 662 A1**
(43) Date of publication of application: **02.04.2025**
(21) Application number: 23199955.8
(22) Date of filing: 27.09.2023
(51) Int. Cl.: G01S 7/40, G01S 13/06, G01S 13/72, G01S 13/931, G06T 7/20

(54) **VERFAHREN ZUR OBJEKTVERFOLGUNG UND RADARGERÄT**

(71) Applicant: Robert Bosch GmbH, 70442 Stuttgart (DE)
(72) Inventor: Marosi, Csaba, 1117 Budapest (HU); Koo, Jozsef, Budapest (HU); Aranyosy, Adam, Budapest (HU)

(57) **Abstract**

A computer-implemented method for tracking objects comprises tracking at least one object with a Kalman-filter method, using radar measurement data, wherein the Kalman-filter method comprises computing an innovation vector based on the radar measurement data. For each tracked object, a component of the innovation vector corresponding to the tracked object is stored. For each tracked object, an updated value of the innovation vector is compared with a predefined first threshold. If the updated value of the innovation vector is above the first threshold, the tracked object is marked as unreliable and the first threshold is stored as a new value of the component of the innovation vector. For each tracked object, an updated value of the innovation vector is compared with a predefined second threshold smaller than the first threshold. If the updated value of the innovation vector is below the second threshold, an unreliable tracked object is marked as reliable and the second threshold is stored as a new value of the component of the innovation vector.

## Description

The present invention relates to methods for tracking objects and to a radar device. More particularly, the invention relates to the tracking of objects based on radar data.

### Prior Art

Advanced driver-assistance systems (ADAS) help drivers in performing maneuvers such as parking or driving. Perception is the subsystem in an ADAS responsible for processing and condensing sensor data into a low-dimensional representation of the environment around the host vehicle (HV). Essentially, the two main tasks that the subsystem performs are classification and tracking.

For the latter, the most commonly used algorithms are variants of the Kalman-filter as provided in Kalman, "A new approach to linear filtering and prediction problems", Journal of Basic Engineering, 82 (1): 35-45, (1960) and Kalman et al., "New results in linear filtering and prediction theory", Journal of Basic Engineering, 83: 95-108 (1961).

The Kalman-filter method comprises two key steps, namely prediction and update. In the prediction step, a motion model is used for propagating the state and uncertainties forward in time.

In the update step, the state is updated and uncertainties are determined with a sensor measurement. The state estimate is refined by a correction term that is dependent on the predicted state, the measurement and an appropriately chosen weighting factor.

It is a challenging task to find the corresponding tracked object-measurement pairs, which is the so-called association problem. Multiple sensors can provide data from the surroundings of the HV, which the system has to assign to already tracked objects, if possible. The difficulties become even more pronounced when location radar sensors are used as they forward a large number of point-like reflections.

This inevitably leads to false associations that will steer the object's state away from the true state. On the function level, this can lead to falsely selecting targets for a given reaction such as automatic emergency braking (AEB).

### Disclosure of the Invention

The invention provides methods for tracking objects and a radar device.

Preferred embodiments are set out in the dependent claims.

According to a first aspect, the invention provides a computer-implemented method for tracking objects, comprising tracking at least one object with a Kalman-filter method, using radar measurement data, wherein the Kalman-filter method comprises computing an innovation vector based on the radar measurement data. The method further comprises storing, for each tracked object, a component of the innovation vector corresponding to the tracked object. The method further comprises comparing, for each tracked object, an updated value of the innovation vector with a predefined first threshold. If the updated value of the innovation vector is above the first threshold, the tracked object is marked as unreliable and the first threshold is stored as a new value of the component of the innovation vector. The method further comprises comparing, for each tracked object, an updated value of the innovation vector with a predefined second threshold. The second threshold is smaller than the first threshold. If the updated value of the innovation vector is below the second threshold, a tracked object which has been marked as unreliable is marked as reliable and the second threshold is stored as a new value of the component of the innovation vector.

According to a second aspect, the invention provides a method for tracking objects, comprising generating radar measurement data by a radar device. A computing device tracks at least one object with a Kalman-filter method, using the radar measurement data, wherein the Kalman-filter method comprises computing an innovation vector based on the radar measurement data. The computing device stores, for each tracked object, a component of the innovation vector corresponding to the tracked object. The computing device compares, for each tracked object, an updated value of the innovation vector with a predefined first threshold. If the updated value of the innovation vector is above the first threshold, the tracked object is marked as unreliable and the first threshold is stored as a new value of the component of the innovation vector. The computing device compares, for each tracked object, an updated value of the innovation vector with a predefined second threshold. The second threshold is smaller than the first threshold. If the updated value of the innovation vector is below the second threshold, a tracked object which has been marked as unreliable is marked as reliable and the second threshold is stored as a new value of the component of the innovation vector.

According to a third aspect, the invention provides a radar device, comprising at least one radar antenna configured to generate radar measurement data. The radar device further comprises a computing device, configured to track at least one object with a Kalman-filter method, using the radar measurement data, wherein the Kalman-filter method comprises computing an innovation vector based on the radar measurement data. The computing device stores, for each tracked object, a component of the innovation vector corresponding to the tracked object. The computing device compares, for each tracked object, an updated value of the innovation vector with a predefined first threshold. If the updated value of the innovation vector is above the first threshold, the tracked object is marked as unreliable and the first threshold is stored as a new value of the component of the innovation vector. The computing device compares, for each tracked object, an updated value of the innovation vector with a predefined second threshold. The second threshold is smaller than the first threshold. If the updated value of the innovation vector is below the second threshold, a tracked object which has been marked as unreliable is marked as reliable and the second threshold is stored as a new value of the component of the innovation vector.

### Advantages of the invention

According to the invention, tracked objects can be marked as reliable or unreliable, i.e., a state is assigned to the tracked objects. By observing the state of tracked objects that were updated by erroneously associated measurements one can detect jumping motions. This is implausible in practice and at the same time can lead to false AEB activations.

The Kalman-filter method comprises a determination of a weighting factor, the so-called Kalman gain, from the process and measurement noise, as a minimum mean-square error estimator. The Kalman gain itself is not used for association errors. However, the innovation vector is also computed in Kalman-filter method and can be utilized for finding possibly erroneous updates. The innovation vector can be considered as a representation of the similarity between the measurement and its estimate based on the object's predicted state and a pre-defined measurement model. The higher the values of the innovation vector, the greater the difference between the states.

According to the invention, a tracked object is flagged as unreliable immediately if a given component of the innovation vector indicates that the association is likely erroneous.

According to the invention, one keeps track of the relevant components of the innovation vector without introducing a significant memory overhead. This way, by marking tracked objects, one can propagate the information about this behavior to higher-level subsystems of the signal chain.

In an embodiment of the method, if no radar measurement data is contributing to a tracked object which has been marked as unreliable for a predefined period of time, memory corresponding to the tracked object is reset. This allows to define a clean state. A member where the component of the innovation vector has been stored can be reset to indicate reliable behavior.

In an embodiment of the method, if the first threshold is stored as a new value of the component of the innovation vector, this value is kept until the updated value of the innovation vector is below the second threshold. The tracked object is treated as unreliable until a new measurement confirms that there is indeed a real-world object with a state similar to that of the tracked object. This indicates that previous updates were necessary, even though the measured states and the object states were perceptibly different. Once it is established, the history of faulty behavior is instantly forgotten, and the tracked object is treated as normal (reliable) again.

In an embodiment of the method, the innovation vector corresponds to a difference between radar measurement data and a model-based prediction.

In an embodiment of the method, the radar measurement data comprises location data. That is, the innovation vector may comprise location entries.

In an embodiment of the method, at least one function of a vehicle is controlled, using information of the tracked objects. For example, an AEB function can be controlled based on the behavior of the tracked objects.

In an embodiment of the method, the at least one function of the vehicle is controlled, taking into account whether the tracked object is marked as reliable or unreliable.

Short description of the drawings
- Figure 1: shows a block diagram of a radar device; and
- Figure 2: shows a flow chart of a method for tracking objects.

The numbering of process steps is for clarity and is generally not intended to imply any particular chronological order. In particular, several process steps can also be carried out simultaneously.

### Description of the embodiments

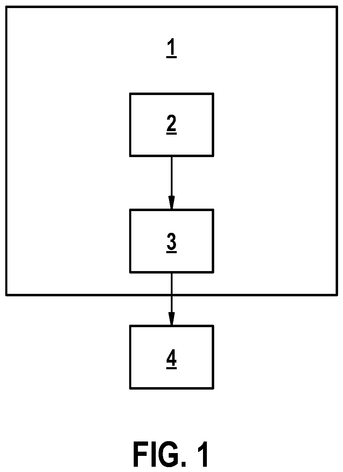

Figure 1 shows a block diagram of a radar device 1 which comprises at least one radar antenna 2 for generating radar measurement data. The at least one radar antenna 2 emits radar signals and receives the reflected radar signals. Based on the reflections, locations of possible objects can be tracked. The radar measurement data may comprise location data.

The radar device 1 further comprises a computing device 3, which may comprise at least one processor, microprocessor, integrated current, and the like. The computing device 3 may further comprise at least one memory for storing radar measurement data and instructions.

The computing device 3 is configured to track at least one object with a Kalman-filter method, using the radar measurement data. The Kalman-filter method comprises a prediction step and an update step. In the prediction step, a motion model is used for propagating the state and uncertainties forward in time. In the update step, the state is updated and uncertainties are determined with a sensor measurement (i.e., using the radar measurement data).

The Kalman-filter method comprises the computation of an innovation vector based on the radar measurement data. The innovation vector corresponds to a difference between radar measurement data and a model-based prediction.

With the Kalman-filter method, objects are tracked. The computing device 3 stores, for each tracked object, a component of the innovation vector corresponding to the tracked object. The computing device 3 may store the given component in a member.

First and second predefined thresholds are defined. The computing device 3 compares, for each tracked object, an updated value of the innovation vector with the predefined first threshold and the second predefined threshold. The second threshold is smaller than the first threshold.

If the updated value of the innovation vector is above the first threshold, the tracked object is marked as unreliable and the first threshold is stored as a new value of the component of the innovation vector.

If the updated value of the innovation vector is below the second threshold, a tracked object which has been previously marked as unreliable is marked as reliable again and the second threshold is stored as a new value of the component of the innovation vector.

If the first threshold is stored as a new value of the component of the innovation vector, this value may be kept until the updated value of the innovation vector is below the second threshold.

If no radar measurement data is contributing to a tracked object which has been marked as unreliable for a predefined period of time, the computing device 3 resets memory corresponding to the tracked object.

The information on the tracked objects, and in particular information whether the tracked objects are reliable or unreliable, can be provided to an external ADAS device 4. The ADAS device 4 may control a function of a vehicle, wherein the vehicle comprises the radar device 1, using information of the tracked objects.

In particular, the at least one function of the vehicle can be controlled by taking into account whether the tracked object is marked as reliable or unreliable. The at least one function can comprise an AEB function.

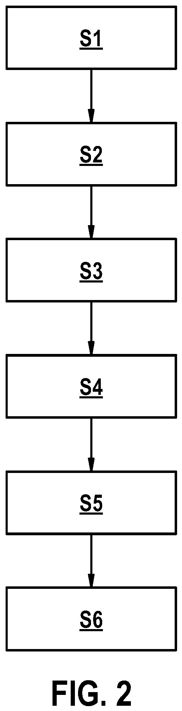

Figure 2 shows a flow chart of a method for tracking objects.

In step S 1, radar measurement data is generated by a radar device, in particular the radar device 1 described above. The radar measurement data may comprise location data.

In step S2, a computing device (in particular, the computing device 3 described above) tracks at least one object with a Kalman-filter method, using the radar measurement data.

As explained above, the Kalman-filter method comprises computing an innovation vector based on the radar measurement data. The innovation vector corresponds to a difference between radar measurement data and a model-based prediction.

In step S3, the computing device 3 stores, for each tracked object, a component of the innovation vector corresponding to the tracked object.

In step S4, the computing device 3 compares, for each tracked object, an updated value of the innovation vector with a predefined first threshold. If the updated value of the innovation vector is above the first threshold, the tracked object is marked as unreliable and the first threshold is stored as a new value of the component of the innovation vector. In other words, the first threshold denotes the upper limit of allowed values of a given component. If an update arrives with a higher innovation component, the object will be marked as unreliable.

In step S5, the computing device 3 compares, for each tracked object, an updated value of the innovation vector with a predefined second threshold. The second threshold is smaller than the first threshold. If the updated value of the innovation vector is below the second threshold, a tracked object which has been marked as unreliable is re-labelled as reliable and the second threshold is stored as a new value of the component of the innovation vector. In other words, the second threshold denotes a remarkably good agreement between a measurement and current object states.

The computing device 3 can overwrite parameters at each update with radar locations.

If no radar measurement data is contributing to a tracked object which has been marked as unreliable for a predefined period of time, memory corresponding to the tracked object is reset.

If the first threshold is stored as a new value of the component of the innovation vector, this value may be kept until the updated value of the innovation vector is below the second threshold.

In step S6, at least one function of the vehicle which comprises the radar device 1 is controlled, using information of the tracked objects. In particular, the at least one function of the vehicle is controlled, taking into account whether the tracked object is marked as reliable or unreliable.

Steps S2 to S5 of the method above can be considered to correspond to a computer-implemented method for tracking objects.

## Claims

1. A computer-implemented method for tracking objects, comprising the steps:
tracking (S2) at least one object with a Kalman-filter method, using radar measurement data, wherein the Kalman-filter method comprises computing an innovation vector based on the radar measurement data;
storing (S3), for each tracked object, a component of the innovation vector corresponding to the tracked object;
comparing (S4), for each tracked object, an updated value of the innovation vector with a predefined first threshold, wherein, if the updated value of the innovation vector is above the first threshold, the tracked object is marked as unreliable and the first threshold is stored as a new value of the component of the innovation vector; and
comparing (S5), for each tracked object, the updated value of the innovation vector with a predefined second threshold, wherein the second threshold is smaller than the first threshold, and wherein, if the updated value of the innovation vector is below the second threshold, a tracked object which has been marked as unreliable is marked as reliable and the second threshold is stored as a new value of the component of the innovation vector.

2. The method of claim 1, wherein, if no radar measurement data is contributing to a tracked object which has been marked as unreliable for a predefined period of time, memory corresponding to the tracked object is reset.

3. The method of claim 1 or 2, wherein, if the first threshold is stored as a new value of the component of the innovation vector, this value is kept until the updated value of the innovation vector is below the second threshold.

4. The method of any of the preceding claims, wherein the innovation vector corresponds to a difference between radar measurement data and a model-based prediction.

5. The method of any of the preceding claims, wherein the radar measurement data comprises location data.

6. The method of any of the preceding claims, wherein at least one function of a vehicle is controlled, using information of the tracked objects.

7. The method of any of the preceding claims, wherein the at least one function of the vehicle is controlled, taking into account whether the tracked object is marked as reliable or unreliable.

8. A method for tracking objects, comprising the steps:
generating (S 1), by a radar device, radar measurement data;
tracking (S2), by a computing device (3), at least one object with a Kalman-filter method, using the radar measurement data, wherein the Kalman-filter method comprises computing an innovation vector based on the radar measurement data;
storing (S3), by the computing device, for each tracked object, a component of the innovation vector corresponding to the tracked object;
comparing (S4), by the computing device (3), for each tracked object, an updated value of the innovation vector with a predefined first threshold, wherein, if the updated value of the innovation vector is above the first threshold, the tracked object is marked as unreliable and the first threshold is stored as a new value of the component of the innovation vector; and
comparing (S5), by the computing device (3), for each tracked object, the updated value of the innovation vector with a predefined second threshold, wherein the second threshold is smaller than the first threshold, and wherein, if the updated value of the innovation vector is below the second threshold, a tracked object which has been marked as unreliable is marked as reliable and the second threshold is stored as a new value of the component of the innovation vector.

9. A radar device (1), comprising:
at least one radar antenna (2) configured to generate radar measurement data; and
a computing device (3), configured to:
track at least one object with a Kalman-filter method, using the radar measurement data, wherein the Kalman-filter method comprises computing an innovation vector based on the radar measurement data,
store, for each tracked object, a component of the innovation vector corresponding to the tracked object,
compare, for each tracked object, an updated value of the innovation vector with a predefined first threshold, wherein, if the updated value of the innovation vector is above the first threshold, the tracked object is marked as unreliable and the first threshold is stored as a new value of the component of the innovation vector, and
compare, for each tracked object, an updated value of the innovation vector with a predefined second threshold, wherein the second threshold is smaller than the first threshold, and wherein, if the updated value of the innovation vector is below the second threshold, a tracked object which has been marked as unreliable is marked as reliable and the second threshold is stored as a new value of the component of the innovation vector.

10. The radar device of claim 9, wherein the computing device (3) is configured to reset memory corresponding to the tracked object if no radar measurement data is contributing to a tracked object which has been marked as unreliable for a predefined period of time.
